# EUROPEAN PATENT APPLICATION

(11) **EP 4 834 507 A1**
(43) Date of publication of application: **04.11.2026**
(21) Application number: 26174797.6
(22) Date of filing: 27.04.2026
(51) Int. Cl.: B23B 31/10, B23B 31/16

(54) **LATHE SUPPORT SYSTEM**

(30) Priority: 29.04.2025 IT 202500009426
(71) Applicant: M-Labs S.r.l., 20045 Lainate (Milano) (IT)
(72) Inventor: RIZZO, MAVERICK, 20045 Lainate (Milano) (IT)
(74) Representative: Girometti, Emiliano

(57) **Abstract**

A lathe support system (1) characterised in that it comprises at least two main bodies (2), each of which defining a fastening portion (3) extending along an extension axis (X) and having a plurality of calibrated notches (4) distributed along a length (5) of the fastening portion (3) and engageable with an object to be turned; and at least two clamping means (6), each of which is slidably associated along the length (5) of the fastening portion (3) and defining a machining thickness for an object.

## Description

The present invention relates to a lathe support system.

The invention in question is in the field of metalworking, specifically in the area of CNC (Computer Numerical Controlled) turning, a computer-controlled machining operation that allows high precision and mass production.

Conventionally processed materials are metals or alloys that make up an object with a generally cylindrical shape. The cylindrical object to be machined on the lathe is usually clamped using different clamping systems, depending on the precision required and the type of machining. One of the most commonly used methods involves the use of a spindle equipped with three jaws.

Typically, to adjust the distance of the workpiece from the spindle base, which determines the protruding part of the workpiece to be machined by the tool, the jaws of the spindle are loosened using, for example, a spanner, moving the workpiece closer to/ further away from the spindle base to the desired position, and re-tightening the jaws to prevent slippage.

Such a system, however, does not allow turning operations to be carried out with agility and speed and increases machining times by reducing the number of workpieces that can be machined in a given time interval.

To overcome this drawback, supports are also used, interposed between the jaws and in contact with the base of the spindle, adapted to define a support surface for the workpiece to be machined.

However, even this solution turns out to be particularly complex and cumbersome as it requires the use of a series of supports of a suitable size.

In this context, the workpiece positioning operation involves a series of operations that negatively affect the total machining time.

It is thus a technical task of the present invention to provide a lathe support system capable of overcoming the drawbacks of the prior art.

The purpose of the present invention is, therefore, to provide a lathe support system that allows the desired depth of the object to be lathed to be adjusted quickly.

The technical task and the specified aims are substantially achieved by a lathe support system, comprising the technical characteristics set forth in one or more of the appended claims. The dependent claims correspond to possible embodiments of the invention.

According to the present invention, a lathe support system is shown which comprises at least two main bodies, each of which defines a fastening portion and has a plurality of calibrated notches which can be engaged with an object to be turned.

In addition, such a support system comprises at least two clamping means that define a machining thickness for the object.

Advantageously, the conformation of the clamping means is designed to allow a smooth movement along a guide formed in the main body. This configuration allows the position of the clamping means to be precisely adjusted forwards and backwards, so that a variable projection of the object to be machined can be selected.

In addition, the clamping means is fastened at a plurality of notches arranged on the surface of the main body, ensuring a stable and secure anchorage in various predefined positions. This configuration offers a high degree of flexibility in use, allowing the position of the clamping means to be adjusted according to operational requirements without the need for additional fastening elements such as screws or bolts.

Thanks to the notches along the surface of the main body, the clamping means can be clamped firmly in different positions without compromising the stability of the connection. This system simplifies assembly and adjustment, reducing intervention time and minimising the risk of accidental loosening.

Further characteristics and advantages of the present invention will become clearer from the indicative and therefore non-limiting description of an embodiment of a lathe support system.

This description will be set out below with reference to the accompanying drawings, which are provided for illustrative purposes only, in which:

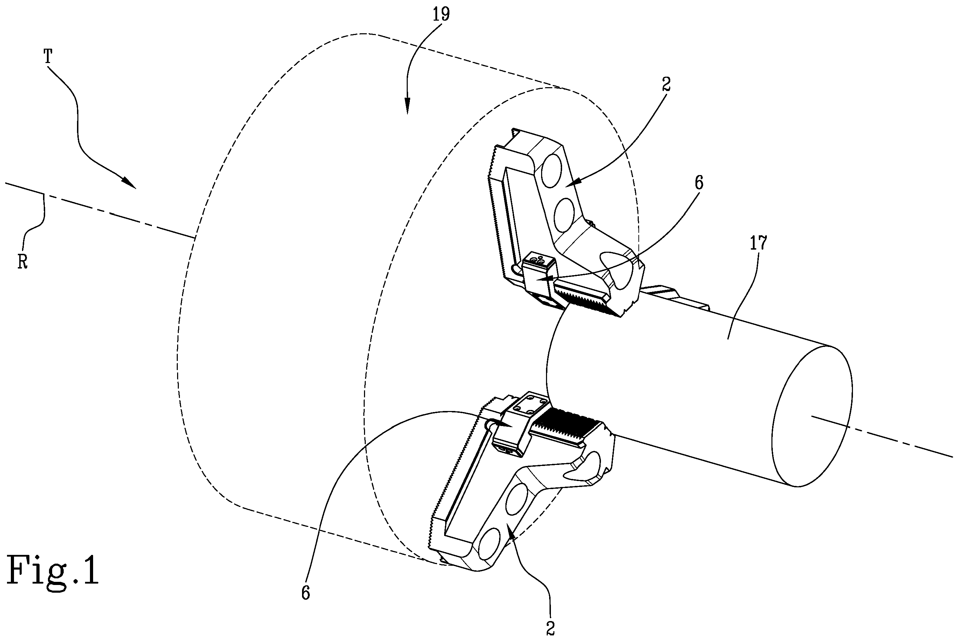

- Figure 1 shows an overall view of a lathe provided with the support system;
- Figure 2 shows a perspective view of a lathe support system;
- Figure 3 shows an exploded view and an assembly of a clamping means for the lathe support system;
- Figures 4A and 4B show a sectional view of a clamping means in different usage configurations.

With reference to the accompanying figures, 1 denotes a lathe support system comprising at least two main bodies 2 each defining a fastening portion 3 extending along an extension axis "X".

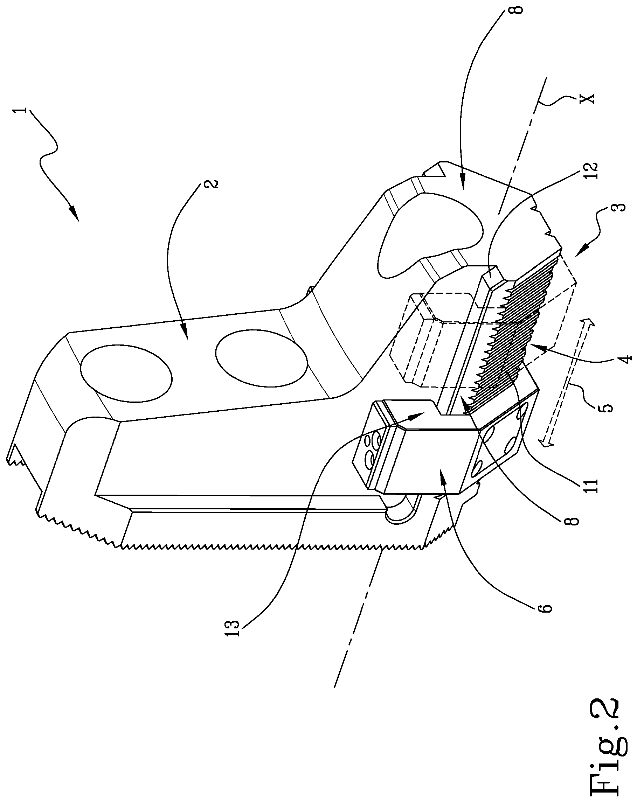

In an embodiment, depicted for example in Figure 2, the main body 2 is L-shaped. Thus, the main body 2 extends along two mutually perpendicular segments wherein one of them defines the fastening portion 3.

The fastening portion 3 defines the surface that comes into direct contact with the object to be lathed and has a plurality of calibrated notches 4 distributed along its length 5 and engageable with that object. In other words, the fastening portion 3 in communion with further fastening portions 3 is able, by coming into contact with the object to be lathed, to securely clamp that object.

In a possible embodiment thereof, the fastening portion 3 comprises at least two mirror-like walls 8 - with respect to a median plane separating them - on the surface of which the calibrated notches 4 are distributed. "Calibrated notches" 4 means a set of incisions made in the wall material for the purpose of precise adjustment.

A groove 11 is thus defined between each calibrated notch 4. In other words, the fastening portion 3 comprises a plurality of calibrated notches 4 and respective grooves 11.

The system 1 further comprises at least two clamping means 6 each of which is slidably associated along the length 5 of the fastening portion 3 and defines a machining thickness for said object.

"Machining thickness" refers to the distance between the base body of the spindle and the object to be lathed in contact with the machining jaws, i.e. the protrusion of the object with respect to the spindle.

In an embodiment, the profile of the clamping means 6 is counter-shaped to the fastening portion 3 and takes on a "C" shape.

Preferably, the clamping means 6 has an open trapezoid profile on the larger base side. In other words, where the clamping means 6 is counter-shaped to the fastening portion 3, the latter also has a trapezoidal profile and the calibrated notches 4 are defined on the sloping walls of the trapezoidal profile.

In addition, the clamping means 6 has retention means 7 that can be engaged at the calibrated notches 4 along the fastening portion 3 in order to choose and select an operating position that defines a specific machining thickness - i.e. a protrusion with respect to the spindle body - for an object to be machined. These retention means 7 are arranged on opposing inner walls 9. In other words, where the clamping means 6 define a trapezoidal profile, the retention means 7 are defined on the inclined inner walls 9 of the trapezium.

Preferably, each wall of the inner walls 9 having the retention means 7 comprises a pair of protrusions 10 interlockable, in use, in a groove 11 defined between the respective adjacent calibrated notches 4.

Thus, "grooves" are defined as a portion cut into the walls of the fastening portion 3, with the function of creating a space to couple the two components, i.e. the clamping means 6 and the main body 2 (i.e. the fastening portion 3) of the system 1.

In order for the clamping means 6 to be able to move along the main body 2 and for the user to be able to choose the right machining level, the main body 2 can comprise a guide 12 on which the clamping means 6 slides.

The sliding guide 12 is a linear element arranged along the edge of the walls of the main body 2 and configured to facilitate the movement of the clamping means 6. In other words, the sliding guide 12 is defined in proximity to the fastening portion 3.

The clamping means 6 is configured to ensure a stable anchorage to the main body 2 and comprises a pair of interlocking portions 13, which is arranged on a pair of bases 14 belonging to the same clamping means 6, ensuring an effective and precise coupling with the main body 2.

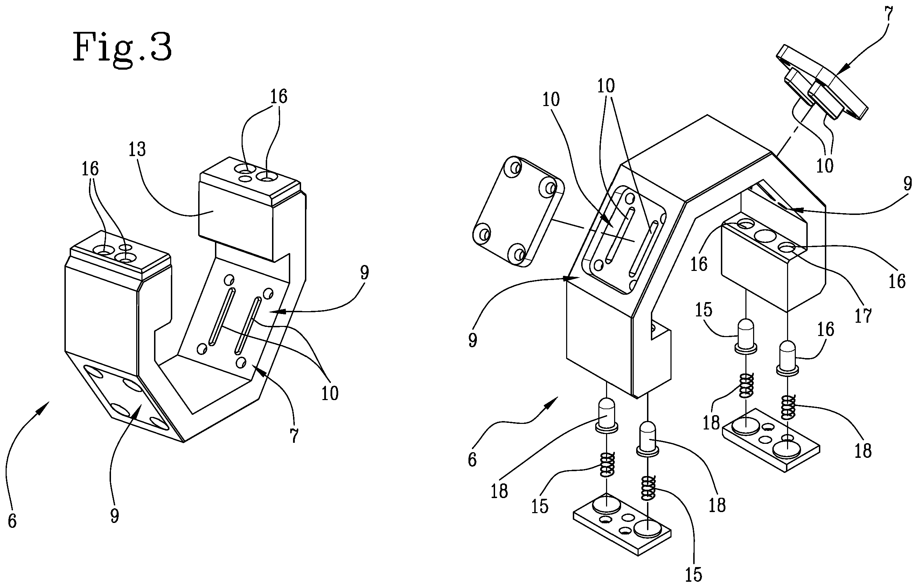

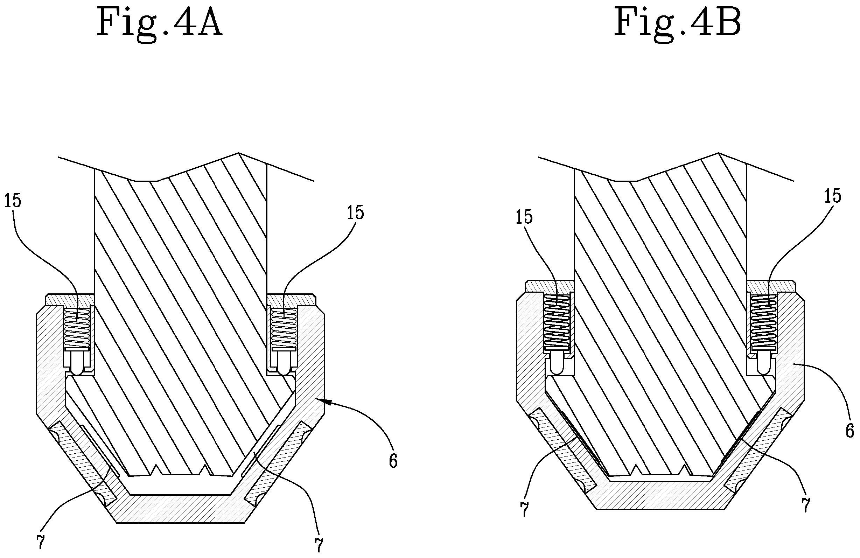

The interlocking portion 13 comprises a plurality of springs 15 (visible in Figure 3, depicting the exploded view of the clamping means 6) which are configured to exert an adhesion force on the clamping means 6 to keep the retention means 7 anchored to the respective grooves 11 defined between the respective adjacent calibrated notches 4 (as depicted for example in Figure 4B).

In addition, each interlocking portion 13 can be provided with a series of through holes 16 within which the springs 15 can freely extend and compress. In addition, each interlocking portion 13 includes a face 17, on which the through holes 16 are formed, positioned so as to face the guide 12. This configuration allows for effective housing and operation of the springs 15, ensuring a secure and stable coupling between the components of the invention.

In other words, the adhesion force of the springs 15 causes the retention means 7 to remain anchored to respective grooves 11 defined between the plurality of calibrated notches 4. In other words, by means of the adhesion force exerted by the springs 15, the retention means 7 do not risk slipping between adjacent grooves 11, i.e. between calibrated notches 4, while stably holding the clamping means 6 in the selected operating position depending on the object to be machined.

Consequently, when the user exerts pressure on the walls of the clamping means 6, it causes the compression of the spring, reducing its length, as can be seen in Figure 4A. This action enables the release of the clamping means 6 from the coupling with main body 2, allowing it to be released in a controlled and safe manner.

In other words, the clamping means 6 releasable from the fastening portion 3 by the compressive action of the plurality of springs 15 defines a configuration of moving the retention means 7 away from the calibrated notches 4 in which the retention means 7 are not anchored to the respective grooves 11.

Preferably, for each base of the pair of bases 14, there are two such springs 15, arranged in pairs as shown in the accompanying figures. Nevertheless, other configurations are possible.

In addition, the springs 15 have an operative end - placed in contact with the guide 12 and passing through the face 17 belonging to the interlocking portion 13 - and a sliding head 18. In other words, the sliding head 18 is defined on the operative end in contact with the guide 12.

The sliding head 18 completely envelops the springs 15, acting as a protective cap, and exerts pressure on the guide to ensure a stable coupling.

In other words, this sliding head 18 is configured, when moving the clamping means 6 along the fastening portion 3, to slide along the guide 12. Furthermore, during one of the operating configurations of Figure 4A or Figure 4B, the sliding head 18 ensures a stable contact interaction between the springs 15 themselves and the guide 12.

By moving the clamping means 6 up and down on the guide 12, the user can easily remove the object to be lathed and replace it with another quickly and efficiently. The operation takes place without the need for screws or additional tools, optimising machining time and simplifying the workpiece clamping and release process. In other words, the guide 12 can have a free end through which the clamping means 6 can be disengaged if it needs to be replaced.

In addition, the present invention relates to a lathe spindle "T" for machining an object.

The latter comprises a base body 19. In the accompanying figures, the base body 19 is able to rotate about its own axis of rotation "R". Preferably, the base body 19 has a cylindrical shape. Therefore, the base body 19 rotates when the lathe is operated to machine the object.

The lathe spindle "T" also comprises a support system 1 described above. The user can move each support system 1 towards or away from a central portion of the base body 19.

Preferably, where the base body 19 is made in the form of a cylindrical body, the support systems 1 are placed on the circular face of the base body 19 and are therefore radially movable towards or away from the central portion.

In other words, the operator has the option of radially adjusting each support system 1 by moving it along the front face of the base body 19. Therefore, the support system 1 is movable along a direction perpendicular to the extension axis "X", i.e. with respect to the axis of rotation "R".

Preferably, the support systems 1 are movable with respect to the central portion by means of respective guides. Preferably, such guides are made in the form of teeth or grooves.

This movement allows precise adaptation of the device configuration should the operator wish to select an object to be lathed with a different diameter.

Advantageously, the lathe support system 1 overcomes the drawbacks of the prior art.

This configuration has numerous additional advantages that improve the efficiency, safety and quality of the turning process.

One of the main benefits is ease of use. The absence of screws or additional tools greatly simplifies the clamping and release of the workpiece, reducing the effort required of the operator.

From a precision point of view, this solution allows stable clamping, avoiding misalignments that could compromise machining quality. Predefined notches on the main body ensure that the workpiece is always correctly positioned, an essential factor for high-precision turning operations.

Increased productivity is another significant benefit. The ability to quickly remove and replace the part reduces downtime, improving overall production efficiency, especially in series production where operational efficiency is crucial.

This configuration also reduces the risk of operational errors, as clamping takes place without the need for tools.

Finally, a further benefit concerns the safety of the operator. The simplification of the clamping system reduces the risk of accidents when handling tools or tightening screws by hand.

In conclusion, this configuration represents a significant improvement over traditional clamping systems, combining operational efficiency, reliability and safety in a single solution optimised for turning.

## Claims

1. A lathe support system (1) **characterised in that** it comprises:
- at least two main bodies (2), each of which defining a fastening portion (3) extending along an extension axis (X) and having a plurality of calibrated notches (4) distributed along a length (5) of said fastening portion (3) and engageable with an object to be lathed; and
- at least two clamping means (6), each of which is slidably associated along the length (5) of said fastening portion (3) and defining a machining thickness for said object.
wherein each clamping means (6) has retention means (7) engageable with said calibrated notches (4) along said fastening portion (3) so as to select an operating position of said clamping means (6) defining a specific machining thickness, and
wherein which each clamping means (6) comprises a pair of interlocking portions (13) placed on respective bases (14) of said clamping means (6) **characterised in that** each interlocking portion (13) comprises a plurality of springs (15) configured, in use, to exert an adhesion force on said clamping means (6) to maintain said retention means (7) anchored to respective grooves (11) defined between respective adjacent calibrated notches (4).

2. The lathe support system (1) according to the main claim, wherein said fastening portion (3) comprises at least two mirror-like walls (8) and provided with said plurality of calibrated notches (4).

3. The lathe support system according to claim 2, wherein said clamping means (6) comprises at least one pair of opposite inner walls (9) having said retention means (7).

4. The lathe support system according to claim 3, wherein each wall having said retention means (7) comprises a pair of protrusions (10) interlockable, in use, in a groove (11) defined between respective adjacent calibrated notches (4).

5. The lathe support system (1) according to one or more of the preceding claims, wherein said main body (2) comprises a guide (12) on which said clamping means (6) is slidable.

6. The lathe support system (1) according to one or more of the preceding claims, wherein said clamping means (6) is releasable from said fastening portion (3) by means of a compression action of said springs (15) defining a configuration of moving said retention means (7) away from said calibrated notches (4) wherein said retention means (7) are not anchored to the respective grooves (11).

7. The lathe support system (1) according to claim 6, wherein each interlocking portion (13) has through holes (16) within which respective springs (15) are extendable and compressible.

8. The lathe support system (1) according to claim 7 when dependent on 5, wherein each interlocking portion (13) has a face (17) on which said through holes (16) facing said guide (12) are formed.

9. The lathe support system (1) according to claim 8, wherein said springs (15) have an operative end in contact with said guide (12) and passing through the face (17) of the interlocking portion (13), said end of said springs (15) having a sliding head (18) configured, during a movement of said clamping means (6) along said fastening portion (3), to slide along said guide (12).

10. A lathe spindle (T) for machining an object comprising:
- a base body (19) rotating during a turning operation on said object;
- a support system (1) according to one or more of the preceding claims.
